# EUROPÄISCHE PATENTSCHRIFT

(11) **EP 1 793 628 B1**
(45) Veröffentlichungstag und Bekanntmachung des Hinweises auf die Patenterteilung: **05.10.2011**
(21) Anmeldenummer: 06123916.6
(22) Anmeldetag: 13.11.2006
(51) Int. Cl.: H04M 1/725

(54) **Chipkarte mit Steuerungsprozessor**
Chipcard with control processor
Carte à puce avec processeur de contrôle

(30) Priorität: 30.11.2005 DE 102005057557
(43) Veröffentlichungstag der Anmeldung: 06.06.2007
(60) Teilanmeldung: 10181831.8
(73) Patentinhaber: Vodafone Holding GmbH, 40213 Düsseldorf (DE)
(72) Erfinder: Ackermann, Thomas, 50676 Köln (DE)
(74) Vertreter: Weisse, Renate

(56) Entgegenhaltungen:
- WO-A-98/49818
- WO-A-98/58510
- WO-A-03/038534
- WO-A-2004/051971
- WO-A1-99/31913
- WO-A2-02/23357
- DE-A1- 19 853 456
- US-B1- 6 223 026

## Beschreibung

### Technisches Gebiet

Die Erfindung betrifft eine Chipkarte, insbesondere eine SIM-Karte, mit einem integrierten Speicher sowie einen Daten- und Steuerbus mit einem Kontaktbereich zum Austauschen von digitalen Daten über ein Chipkartenlesegerät mit einem Mobilfunkendgerät, wobei die Chipkarte einen Prozessor zum Steuern weiterer Geräte und/oder Geräteanordnungen über das Mobilfunkendgerät enthält und Authentifizierungsdaten an das Mobilfunknetz zum Einbuchen übermittelt werden. Ferner betrifft die Erfindung ein Mobilfunkendgerät mit einem Chipkartenlesegerät, mit dem der Speicher einer Chipkarte, insbesondere einer SIM-Karte, gelesen oder beschrieben werden kann, die Chipkarte einen Prozessor zum Steuern weiterer Geräte und/oder Geräteanordnungen über das Mobilfunkendgerät aufweist und Authentifizierungsdaten an das Mobilfunknetz zum Einbuchen übermittelt werden. Erfindungsgemäß wird die Aufgabe auch durch eine Anordnung von wenigstens zwei Endgeräten zum Steuern des einen Endgeräts durch das andere Endgerät gelöst, wobei
a) das erste Endgerät eine Sende-/Empfangseinheit und das zweite Endgerät eine Sende-/Empfangseinheit enthält,
b) eines der Endgeräte ein Chipkartenlesegerät enthält, welches eine Chipkarte, insbesondere eine SIM-Karte, lesen oder beschreiben kann,
c) ein Netzwerk oder eine sonstige Verbindung, über welches das erste Endgerät mit dem zweiten Endgerät Daten mittels der Sende- bzw. Empfangseinheit austauscht,
d) die Chipkarte einen Prozessor und ein Anweisungsskript in einem Speicher zum Steuern des zweiten Endgeräts über das erste Endgerät aufweist und
e) Authentifizierungsdaten vom ersten Endgerät an das Mobilfunknetz zum Einbuchen übermittelt werden.

### Stand der Technik

Es sind Chipkarten, insbesondere SIM-Karten bekannt, die wenigstens einen Datenspeicher enthalten. Der Datenspeicher kann lesbar und beschreibbar, aber auch nur lesbar ausgebildet sein. Dieser Datenspeicher wird mit einem Chipkartenleser bzw. -schreiber ausgelesen oder beschrieben. Die Chipkarte weist dazu geeignete Kontaktflächen auf, um mit komplementären Kontakten des Chipkartenlesers eine Verbindung für den Zugriff für ein Gerät herzustellen.

Der Datenspeicher verfügt über ein entsprechend geeignetes Bussystem mit Daten- und Steuerleitungen. Der Chipkartenleser ist üblicherweise wiederum Bestandteil eines Endgeräts, welches die in der Chipkarte gespeicherten Daten verarbeitet. Das Endgerät ist daher eine geeignete prozessorgesteuerte Einheit. Die Daten sind insbesondere Tabellen oder ausführbare Programme, wobei die Programme von dem Prozessor des Endgeräts ausgeführt werden.

In Mobilfunkendgeräten, insbesondere Telematikgeräten, aber auch Bankkarten oder Festnetztelefonen kommen solche Chipkarten zum Einsatz. Über den Chipkartenleser können die prozessorgesteuerten Endgeräte auf die Daten aus dem Speicher der Chipkarte zugreifen und diese verarbeiten. Bei der Identifizierung und Authentifizierung und sonstigen Verschlüsselungen kommen spezielle Formeln bzw. Algorithmen zum Einsatz, die einem Missbrauch einer Chipkarte vorbeugen. Diese Berechnungen werden mit einem Prozessor durchgeführt.

Die Offenlegungsschrift DE 34 12 663 offenbart ein Chipkartensystem mit Chipkarten, welche einen Prozessor enthalten. Die Chipkarten dienen zur Verwendung als Geldersatz, als Ausweis beziehungsweise als Speichermedium. Eine einzige Chipkarte kann dabei nacheinander für unterschiedliche Anwendungsfälle benutzbar sein. Für die unterschiedlichen Anwendungsfälle sind unterschiedliche Bereiche eines in dem Chip integrierten Speichers oder einer Funktionseinheit vorgesehen. Für die Auswahl der unterschiedlichen Bereiche im Chip ist eine Auswahlschaltung in dem Chip vorgesehen, für die eine bestimmte Auswahlprozedur festgelegt ist, durch welche sichergestellt werden kann, dass die für den betreffenden Anwendungsfall relevanten Bereiche und nur diese zugeordnet werden. Für spezielle Anwendungsfälle ist als Funktionseinheit ein Prozessor in den Chip eingebaut, durch den die in den unterschiedlichen speziellen Anwendungsfällen erforderlichen Prozesse abgewickelt werden. Die Funktionseinheiten befinden sich dabei auf der Chipkarte, um sie für multifunktionale Anwendungen nutzen zu können.

Als Nachteil erweist sich, dass der Prozessor des Endgeräts zahlreiche Aufgaben übernehmen muss, die zur Auslastung des Endgeräts führen, bzw. zusätzliche Prozessorkapazitäten bzw. weitere Geräte und/oder Geräteanordnungen erfordern. Es werden daher bestimmte Aufgaben über Vernetzungen auf andere Rechner ausgelagert, die aus ökonomischen Gründen oft zentral für mehrere Endgeräte ausgeführt werden. Dadurch werden insbesondere die Netzwerkkapazitäten durch die Datenübertragungen nachteilig reduziert. Es ist daher seitens der Netzbetreiber wünschenswert wieder Steuerungsaufgaben, die als Dienst bisher beispielsweise durch zentrale Netzrechner übernommen wurden, auf die Endgeräte zu übertragen. Die Endgeräte stoßen bzgl. der Prozessorauslastung dabei jedoch recht schnell an ihre Rechenkapazitätsgrenze.

Die WO 98/58510 beschreibt ein Mobilfunkendgerät mit einer SIM-Karte, welche über Datenverarbeitungsmittel verfügt. Als Datenverarbeitungsmittel sind ein Speicher, ein Mikrokontroller und ein Kommunikationskontroller in der SIM-Karte vorgesehen. Über eine in dem Mobilfunkendgerät enthaltene, drahtlose Schnittstelle mit kurzer Reichweite, (z.B. eine infrarote, induktive oder elektromagnetische Schnittstelle) wird eine direkte Kommunikation zwischen einem externen Gerät und der SIM-Karte ohne Nutzung des Mobilfunknetzes ermöglicht. Auf diese Weise sind eine Steuerung des externen Geräts durch die SIM-Karte und ein Datenaustausch zwischen SIM-Karte und externem Gerät ohne ein Mobilfunknetz durchführbar. Als externes Gerät wird beispielsweise ein Bankautomat oder eine Kasse in einem Ladengeschäft genannt.

Die WO 03/038534 A1 offenbart ein System, bei dem ein Zentralserver mit einer Vielzahl von RTU's (remote terminal units) verbunden ist. Die Verbindung zwischen RTU's und Zentralserver erfolgt entweder über ein Modem oder über das Mobilfunknetz unter Benutzung von SMS bzw. GPRS, wobei der Zentralserver auf die SIM-Karte des RTU's zugreift. Die SIM-Karte des RTU's enthält außerdem einen Prozessor. Das RTU verfügt über eine Mehrzahl von Schnittstellen zur Kommunikation und zur Steuerung von externen, an diese Schnittstellen angeschlossene Geräte. Die RTU's agieren also passiv, da der aktive Part von dem Zentralserver übernommen wird.

Die WO 2004/051971 A1 zeigt ein Mobilfunktelefon ohne fest verbauten Mikroprozessor auf. Der Mikroprozessor ist vielmehr in einer entfernbaren SIM-Karte vorgesehen. Durch Einsetzen der SIM-Karte mit dem Mikroprozessor in einen SIM-Karten-Halter des Mobilfunktelefons wird über entsprechende Kontakte das Mobilfunktelefon mit dem Mikroprozessor verbunden. Der Mikroprozessor ermöglicht die üblichen Funktionen eines Mobilfunktelefons.

In der WO 99/31913 wird eine Fernsteuerung von Fahrzeugfunktionen über ein Mobilfunknetz offenbart. In dem Fahrzeug wird ein Mobilfunktelefon mit einer SIM-Karte entnehmbar von einer Aufnahmevorrichtung gehalten, welche eine Schnittstelle des Mobilfunktelefons mit einer fest eingebauten Steuerungseinheit verbindet. Alternativ enthält die Steuereinheit ein integriertes Mobilfunkmodul zum Austausch von Daten über das Mobilfunknetz. Mit einem zweiten Mobilfunktelefon oder einem Festnetztelefon kann ein Benutzer weltweit Funktionen des Fahrzeugs (z.B. eine Zentralverriegelung, eine Hupe oder ein Licht) aktivieren oder deaktivieren. Dazu wählt der Benutzer das Mobilfunktelefon bzw. das Mobilfunkmodul im Fahrzeug an und gibt entsprechende Kommandos in sein Telefon ein.

Die DE 198 53 456 A1 beschreibt ebenfalls eine Fernsteuerung von Geräten über ein Mobilfunknetz. Ein Benutzer wählt mit einem Mobilfunkendgerät eine Femmelde-Empfangseinrichtung an. Die Fernmelde-Empfangseinrichtung ist mit elektrisch betätigbaren Einrichtungen verbunden. Vom Benutzer in das Mobilfunkendgerät eingegebene alphanumerische Zeichen oder Sprachkommandos werden über das Mobilfunknetz an die Fernmelde-Empfangseinheit übermittel, welche daraufhin eine entsprechende Steuerung der elektrisch betätigbaren Einrichtungen vornimmt.

In der WO 02/23357 wird eine Vorrichtung zum Anzeigen eines erfolgreichen Datentransfers zwischen einem USB-Anschluss und einer USB-Chipkarte dargestellt. Die USB-Chipkarte verfügt über einen integrierten Schaltkreis mit einer USB-Schnittstelle, Datenverkehrs-Anzeigeschaltkreisen und einem Mikrocontroller. Weiterhin ist ein LED-Treiber in der Chipkarte vorgesehen, über den externe Leuchtdioden bei einem Datentransfer durch den Mikrokontroller angesteuert werden.

### Offenbarung der Erfindung

Aufgabe der Erfindung ist es, Endgeräte mit Chipkarten zu entlasten und Funktionen und/oder sonstige Dienste des Endgeräts auszulagern bzw. zusätzliche Geräte und/oder Geräteanordnungen zu reduzieren, welche ansonsten erforderlich wären.

Erfindungsgemäß wird die Aufgabe dadurch gelöst, dass bei einer Chipkarte der eingangs genannten Art die Chipkarte und der Prozessor zum Steuern eines Personalcomputers über ein Mobilfunknetz ausgebildet sind, wobei der Personalcomputer über ein Mobilfunkendgerät oder über ein Modem und ein Festnetz mit dem Mobilfunknetz gekoppelt ist, und wobei eine USB-Schnittstelle für die Chipkarte zum Übertragen von Programmen und Daten, welche von dem Prozessor der Chipkarte zur Steuerung des Personalcomputers abgearbeitet werden, vorgesehen ist.

Die Aufgabe wird weiterhin durch ein Mobilfunkendgerät mit einem Chipkartenlesegerät, mit dem der Speicher einer Chipkarte gelesen oder beschrieben werden kann, der eingangsgenannten Art gelöst, die Chipkarte und der Prozessor zum Steuern eines Personalcomputers über ein Mobilfunknetz ausgebildet sind, wobei der Personalcomputer über ein Mobilfunkendgerät oder über ein Modem und ein Festnetz mit dem Mobilfunknetz gekoppelt ist, und wobei eine USB-Schnittstelle für die Chipkarte zum Übertragen von Programmen und Daten, welche von dem Prozessor der Chipkarte zur Steuerung des Personalcomputers abgearbeitet werden, vorgesehen ist.

Nach der Erfindung wird die Aufgabe ebenfalls dadurch gelöst, dass bei einer Anordnung von wenigstens zwei Endgeräten zum Steuern des einen Endgeräts durch das andere Endgerät der eingangs genannten Art,
f) das Netzwerk als ein Mobilfunknetz und das erste Endgerät als Mobilfunkendgerät ausgebildet ist,
g) das zweite Endgerät ein Personalcomputer ist, wobei der Personalcomputer über ein Mobilfunkendgerät oder über ein Modem und ein Festnetz mit dem Mobilfunknetz gekoppelt ist,
h) die Chipkarte und der Prozessor zum Steuern des Personalcomputers über ein Mobilfunknetz ausgebildet sind, und
j) eine USB-Schnittstelle für die Chipkarte zum Übertragen von Programmen und Daten, welche von dem Prozessor der Chipkarte zur Steuerung des Personalcomputers abgearbeitet werden, vorgesehen ist.

Durch die Verwendung eines Prozessors auf der Chipkarte, der Steuerungsaufgaben für externe Geräte übernehmen kann, wird das Endgerät von solchen Aufgaben befreit. Damit wird zum einen das Netz entlastet, da diese Steuerungsaufgaben nicht auf einen Netzrechner übertragen werden. Zum anderen wird das steuernde Endgerät entlastet, da die Steuerungsaufgaben auch nicht von diesem übernommen werden. Das steuernde Endgerät sowie das übertragende Netz dienen nun lediglich als Vermittlungsvorrichtungen. Es können dabei auch Aufgaben von mehreren Geräten oder Geräteanordnungen übernommen werden.

Ein weiterer Vorteil, der sich durch die Verwendung eines Prozessors auf der Chipkarte ergibt, besteht darin, dass die Steuerungsaufgaben unabhängig von dem jeweiligen Endgerät, in das die Chipkarte eingesetzt wird, vorgenommen werden können.

Bei der erfindungsgemäßen Chipkarte ist das Endgerät als Mobilfunkendgerät vorgesehen. Dadurch wird eine erhebliche Mobilität des Endgeräts erreicht. Auch das erfindungsgemäße Endgerät ist als Mobilfunkendgerät ausgestaltet. Damit ist gewährleistet, dass die Steuerung des Endgeräts aus der Ferne vorgenommen werden kann. Die Steuerung ist somit im Rahmen des Mobilfunknetzes mobil möglich.

Bei der erfindungsgemäßen Anordnung ist das Netzwerk als ein Mobilfunknetz und wenigstens eines der Endgeräte als Mobilfunkendgerät ausgebildet. Dadurch wird die Mobilität der Endgeräte als besonderes Merkmal herausgestellt.

Eine vorteilhafte Ausgestaltung der erfindungsgemäßen Chipkarte besteht darin, dass der Prozessor zur Steuerung des Endgeräts ausgebildet ist. Durch diese Maßnahme ist es nun nicht mehr unbedingt notwendig, dass das Endgerät bzw. weitere Geräte und/oder Geräteanordnungen selbst einen Prozessor aufweist bzw. aufweisen. Die Endgeräte können auf diese Weise extrem einfach ausgebildet sein. Sie bilden dadurch lediglich eine "Hülle", in die der Teilnehmer seine Rechnereinheit, welche durch die Chipkarte 10 gebildet wird, einführt.

Das Endgerät, in das die steuernde Chipkarte eingeführt werden kann, kann auch als Festnetzgerät, welches in einem entsprechenden Netzwerk eingebunden ist, verwendet werden. Eine besondere Variante des erfindungsgemäßen Endgeräts ergibt sich, wenn das Endgerät derart ausgebildet ist, dass es nun selbst durch den Prozessor auf der Chipkarte gesteuert wird. Damit können die Endgeräte auf ein Minimum an technischen Aufwand reduziert werden. Sie benötigen nämlich keinen eigenen Prozessor, keinen eigenen Speicher, etc.

Ein weiterer Aspekt des erfindungsgemäßen Endgeräts besteht darin, eine Schnittstelle, insbesondere eine Kabel- und/oder Infrarot- und/oder Funkschnittstelle vorzusehen, über welche direkt über das Chipkartenlesegerät mit der Chipkarte kommuniziert werden kann. Damit kann der Chipkarte unmittelbar ein Programm oder sonstige Daten übertragen werden, die zur Steuerung des zu steuernden Endgeräts erforderlich sind.

Als besonders vorteilhaft erweist sich, wenn das Endgerät einen zum Prozessor auf der Chipkarte parallelen Prozessor zur Arbeitsteilung aufweist. Durch die Verwendung wenigstens eines zusätzlichen Prozessors, besonders dann wenn er im Endgerät vorgesehen ist, wird die Verarbeitungsgeschwindigkeit erhöht. Die Steuerung kann dadurch umfassender und effizienter ausgebildet sein.

Weitere Vorteile ergeben sich aus dem Gegenstand der Unteransprüche sowie der Zeichnung mit der dazugehörigen Beschreibung.

### Kurze Beschreibung der Zeichnung

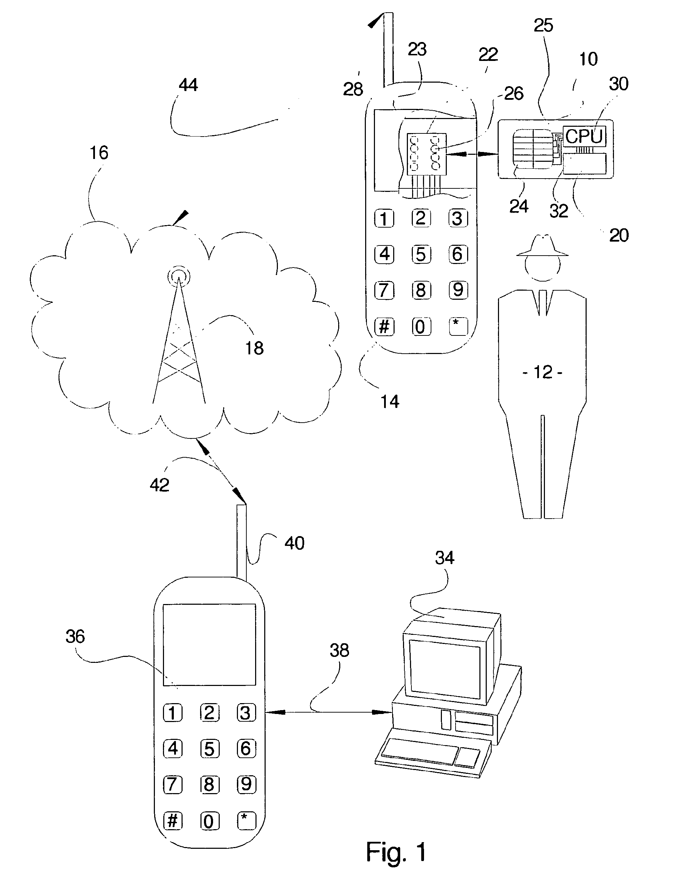

- Fig. 1: zeigt in einer schematischen Prinzipskizze eine Anordnung mit einer erfindungsgemäßen Chipkarte.

### Bevorzugtes Ausführungsbeispiel

In Fig. 1 wird mit 10 eine Chipkarte bezeichnet. Die Chipkarte 10 ist im vorliegenden Ausführungsbeispiel als SIM-Karte (= Subscriber Identity Module) ausgebildet. Die Chipkarte 10 dient in diesem Beispiel insbesondere dazu, einen Mobilfunkteilnehmer 12 mit seinem Mobilfunkendgerät 14 in ein Mobilfunknetz 16 einzubuchen. Symbolisch wird das Mobilfunknetz 16 durch einen Funkmasten 18 dargestellt. Die auf der Chipkarte 10 enthaltenen Daten, welche in einem Speicher 20 der Chipkarte 10 abgelegt sind, werden dabei für das Mobilfunknetz 16 zur Identifizierung und Authentifizierung des Mobilfunkteilnehmers 12 herangezogen. Das Mobilfunkendgerät 14 verfügt über einen Chipkartenleser 22. Die Chipkarte 10 wird zur Nutzung des Mobilfunkendgeräts 14 seitlich in den Chipkartenleser 22 eingeführt. Bei dem Mobilfunkendgerät 14 ist ein Stück 23 herausgebrochen, um den Chipkartenleser 22 sichtbar zu machen.

Die Chipkarte 10 weist Kontaktflächen 24 auf, die mit komplementären Kontakten 26 des Chipkartenlesers 22 in Berührung stehen. Dadurch können Daten zwischen der Chipkarte 10 und dem Mobilfunkendgerät 14 über den Chipkartenleser 22 ausgetauscht werden. Die Daten können über eine nicht dargestellte Steuereinheit des Mobilfunkendgeräts 14 verarbeitet werden. Die Steuereinheit enthält üblicherweise einen Prozessor und einen Speicher, in dem Programme und sonstige Daten abgelegt und abgearbeitet werden. Daten, wie beispielsweise die Identifikations- und/oder Authentifizierungsdaten können über eine Sende-/Empfangseinheit 28 an das Mobilfunknetz 16 beim Einbuchen übermittelt werden.

Die Chipkarte 10 weist neben dem Speicher 20 einen Prozessor 30 auf, der über einen Daten- und Steuerbus 32 direkt auf den Speicher 20 der Chipkarte 10 zugreifen kann. Über die Kontaktflächen 24 des Chipkartenlesers wird vom Mobilfunkendgerät 14 eine Verbindung 25 zum Prozessor 30 geschaffen. Der Prozessor 30 auf der Chipkarte 10 ist, weitestgehend ein "autarkes Rechnersystem". Im Speicher 20 der Chipkarte 10 abgespeicherte Daten und Programme können durch den Prozessor 30 abgearbeitet werden. Der Prozessor 30 läuft parallel zum Prozessor des Mobilfunkendgeräts 14. Grundsätzlich kann der Prozessor 30 auf der Chipkarte 10 auch die Rechnerleistung bzw. Steuerungsaufgaben des Prozessors des Mobilfunkendgeräts 14 übernehmen.

Die Programme, die der Prozessor 30 auf der Chipkarte 10 abarbeiten soll, können alternativ bereits bei der Herstellung der Chipkarte 10 oder nachträglich über ein Netz, insbesondere Mobilfunknetz 16, in den Speicher 20 übertragen werden. Die entsprechenden Daten können auch über eine dargestellte Infrarot- bzw. Funkschnittstelle, wie Bluetooth, übertragen werden. Aber auch eine herkömmliche, beispielsweise serielle, parallele oder USB-Kabelverbindung, eignet sich zur Datenübertragung auf die Chipkarte 10. Damit können dem Mobilfunkteilnehmer 12 Dienste angeboten werden, die unabhängig von seinem jeweils verwendeten Mobilfunkendgerät 14, auf seiner Chipkarte abgearbeitet wird.

Ein Personalcomputer 34 ist mit einem weiteren Mobilfunkendgerät 36 gekoppelt, Pfeil 38. Der Personalcomputer 34 ist ein Beispiel für ein Endgerät, welches mit Hilfe der Chipkarte 10 gesteuert wird. Grundsätzlich können beliebige Endgeräte, wie Kühlschränke, Fernseher, Beleuchtung, Heizung oder sonstige Automaten über die Chipkarte 10 gesteuert oder Daten ausgetauscht werden. Das Mobilfunkendgerät 36 fungiert im vorliegenden Ausführungsbeispiel dabei als Vermittlungseinheit für das Mobilfunknetz 16. Der Personalcomputer 34 könnte theoretisch auch mit einem Modem über das Festnetz mit dem Mobilfunknetz gekoppelt sein.

Das Mobilfunkendgerät 36 weist ein Sende-/Empfangsteil 40 auf, um die von der Chipkarte 10 erzeugten Daten und Steuerungsdaten über das Mobilfunknetz 16 zu empfangen, Pfeil 42, oder Daten aus dem Personalcomputer 34 an die Chipkarte 10 zu übermitteln. Die Daten werden dazu zuvor von der Sende-/Empfangseinheit 28 des Mobilfunkendgeräts 14 an das Mobilfunknetz 16 gesandt, Pfeil 44, welches diese an das Mobilfunkendgerät 36 weiterleitet, so dass sie schließlich zum Personalcomputer 34 gelangen. Dieser lässt sich damit aus der Ferne durch die Chipkarte 10 steuern.

## Patentansprüche

1. Chipkarte (10), insbesondere SIM-Karte, mit einem integrierten Speicher (20) sowie einem Daten- und Steuerbus (32) mit einem Kontaktbereich (24) zum Austauschen von digitalen Daten über ein Chipkartenlesegerät (22) mit einem Mobilfunkendgerät (14), wobei die Chipkarte (10) einen Prozessor (30) enthält zum Steuern weiterer Geräte (34) und/oder Geräteanordnungen (34, 36) über das Mobilfunkendgerät (14), und Authentifizierungsdaten an das Mobilfunknetz (16) zum Einbuchen übermittelt werden, **dadurch gekennzeichnet, dass** die Chipkarte (10) und der Prozessor (30) zum Steuern eines Personalcomputers (34) über ein Mobilfunknetz (16) ausgebildet sind, wobei der Personalcomputer (34) über ein Mobilfunkendgerät (36) oder über ein Modem und ein Festnetz mit dem Mobilfunknetz (16) gekoppelt ist, und wobei eine USB-Schnittstelle für die Chipkarte (10) zum Übertragen von Programmen und Daten, welche von dem Prozessor (30) der Chipkarte (10) zur Steuerung des Personalcomputers abgearbeitet werden, vorgesehen ist.

2. Mobilfunkendgerät (14) mit einem Chipkartenlesegerät (22), mit dem der Speicher (20) einer Chipkarte (10), insbesondere einer SIM-Karte, gelesen oder beschrieben werden kann, und die Chipkarte (10) einen Prozessor (30) zum Steuern weiterer Geräte (34) und/oder Geräteanordnungen (34, 36) über das Mobilfunkendgerät (14) aufweist und Authentifizierungsdaten an das Mobilfunknetz (16) zum Einbuchen übermittelt werden, **dadurch gekennzeichnet, dass** die Chipkarte (10) und der Prozessor (30) zum Steuern eines Personalcomputers (34) über ein Mobilfunknetz (16) ausgebildet sind, wobei der Personalcomputer (34) über ein Mobilfunkendgerät (36) oder über ein Modem und ein Festnetz mit dem Mobilfunknetz (16) gekoppelt ist, und wobei eine USB-Schnittstelle für die Chipkarte (10) zum Übertragen von Programmen und Daten, welche von dem Prozessor (30) der Chipkarte (10) zur Steuerung des Personalcomputers abgearbeitet werden, vorgesehen ist.

3. Mobilfunkendgerät (14) mit einem Chipkartenlesegerät (22), mit dem der Speicher (20) einer Chipkarte (10) gelesen oder beschrieben werden kann, nach Anspruch 2, **gekennzeichnet durch** eine Schnittstelle, insbesondere eine Kabel- und/oder Infrarot- und/oder Funkschnittstelle, über welche direkt über das Chipkartenlesegerät (22) mit der Chipkarte (10) kommuniziert wird.

4. Mobilfunkendgerät (14) mit einem Chipkartenlesegerät (22), mit dem der Speicher (20) einer Chipkarte (10) gelesen oder beschrieben werden kann, nach einem der Ansprüche 2 oder 3, **dadurch gekennzeichnet, dass** ein paralleler Prozessor im Mobilfunkendgerät (14) und/oder im Personalcomputer (34) zur Arbeitsteilung vorgesehen ist.

5. Mobilfunkendgerät (14) mit einem Chipkartenlesegerät (22), mit dem der Speicher (20) einer Chipkarte (10) gelesen oder beschrieben werden kann, nach einem der Ansprüche 2 bis 4, **dadurch gekennzeichnet, dass** eine Schnittstelle, insbesondere eine Kabel- und/oder Infrarot- und/oder Funkschnittstelle zwischen dem Mobilfunkendgerät (14) und dem Personalcomputer (34) zum Datenaustausch vorgesehen ist.

6. Anordnung von wenigstens zwei Endgeräten (14, 34) zum Steuern des einen Endgeräts (34) durch das andere Endgerät (14), wobei
a) das erste Endgerät (14) eine Sende-/Empfangseinheit (28) und das zweite Endgerät (34) eine Sende-/Empfangseinheit (36, 40) enthält,
b) das erste Endgerät (14) ein Chipkartenlesegerät (22) enthält, welches eine Chipkarte (10), insbesondere eine SIM-Karte, lesen oder beschreiben kann,
c) ein Netzwerk (16) oder eine sonstige Verbindung, über welches das das erste Endgerät (14) mit dem zweiten Endgerät (34) Daten mittels der Sende- bzw. Empfangseinheit (36, 40) austauscht,
d) die Chipkarte (10) einen Prozessor (30) und ein Anweisungsskript in einem Speicher (20) zum Steuern des zweiten Endgeräts (34) über das erste Endgerät (14) aufweist, und
e) Authentifizierungsdaten vom ersten Endgerät (14) an das Mobilfunknetz (16) zum Einbuchen übermittelt werden,
**dadurch gekennzeichnet, dass**
f) das Netzwerk (16) als ein Mobilfunknetz (16) und das erste Endgerät (14) als Mobilfunkendgerät ausgebildet ist,
g) das zweite Endgerät ein Personalcomputer (34) ist, wobei der Personalcomputer (34) über ein Mobilfunkendgerät (36) oder über ein Modem und ein Festnetz mit dem Mobilfunknetz (16) gekoppelt ist,
h) die Chipkarte (10) und der Prozessor (30) zum Steuern des Personalcomputers (34) über ein Mobilfunknetz(16) ausgebildet sind, und
j) eine USB-Schnittstelle für die Chipkarte (10) zum Übertragen von Programmen und Daten, welche von dem Prozessor (30) der Chipkarte (10) zur Steuerung des Personalcomputers abgearbeitet werden, vorgesehen ist.

## Claims

1. A chip card (10), in particular a SIM card, comprising an embedded memory (20) and a data and control bus (32) with a contact area (24) for exchanging digital data over a chip card reader (22) with a mobile terminal (14), wherein the chip card (10) comprises a processor (30) for controlling further devices (34) and / or device arrangements (34, 36) via the mobile terminal (14), and authentication data is transmitted to the mobile radio network (16) for registration, **characterized in that** the chip card (10) and the processor (30) are configured for controlling a personal computer (34) via a mobile radio network (16), wherein the personal computer (34) is coupled to the mobile radio network (16) over a mobile terminal (36) or a modem and a landline network, and wherein a USB interface is provided to the chip card (10) for transferring programs and data which are processed by the processor (30) of the chip card (10) for controlling the personal computer.

2. A mobile terminal (14) with a chip card reader (22) for reading from or writing into the memory (20) of a chip card (10), in particular a SIM card, and the chip card (10) is provided with a processor (30) for controlling further devices (34) and / or device arrangements (34, 36) via the mobile terminal (14), and authentication data is transmitted to the mobile radio network (16) for registration, **characterized in that** the chip card (10) and the processor (30) are configured for controlling a personal computer (34) via a mobile radio network (16), wherein the personal computer (34) is coupled to the mobile radio network (16) over a mobile terminal (36) or a modem and a landline network, and wherein a USB interface is provided to the chip card (10) for transferring programs and data which are processed by the processor (30) of the chip card (10) for controlling the personal computer.

3. A mobile terminal (14) with a chip card reader (22) for reading from or writing into the memory (20) of a chip card (10) according to claim 2, **characterized by** an interface, in particular a cable and / or infrared and / or radio interface for directly communicating via the chip card reader (22) with the chip card(10).

4. A mobile terminal (14) with a chip card reader (22) for reading from or writing into the memory (20) of a chip card (10) according to one of claims 2 or 3, **characterized in that** a parallel processor is provided in the mobile terminal (14) and / or the personal computer (34) for the division of labour.

5. A mobile terminal (14) with a chip card reader (22) for reading from or writing into the memory (20) of a chip card (10) according to one of claims 2 to 4, **characterized in that** an interface, in particular a cable and / or infrared and / or radio interface, is provided between the mobile terminal (14) and the personal computer (34) for data exchange.

6. Arrangement of at least two terminals (14, 34) for controlling one of the terminals (34) by the other terminal (14), wherein
a) the first terminal (14) comprises a transmission and reception unit (28) and the second terminal (34) comprises a transmission and reception unit (36, 40),
b) the first terminal (14) comprises a chip card reader (22) which can read or write into a chip card (10), in particular a SIM card,
c) a network (16) or other connection, via which the first terminal (14) exchanges data with the second terminal (34) by means of the transmission and reception unit (36, 40),
d) the chip card (10) comprises a processor (30) and an instruction script in a memory (20) for controlling the second terminal (34) over the first terminal (14), and
e) authentication data is transmitted from the first terminal (14) to the mobile radio network (16) for registration,
**characterized in that**
f) the network (16) is configured as a mobile radio network (16) and the first terminal (14) is configured as a mobile terminal,
g) the second terminal is a personal computer (34), wherein the personal computer (34) is coupled to the mobile radio network (16) via a mobile terminal (36) or a modem and a landline network,
h) the chip card (10) and the processor (30) are adapted for controlling the personal computer (34) via a mobile radio network (16), and
j) a USB interface is provided to the chip card (10) for transferring programs and data which are processed by the processor (30) of the chip card (10) for controlling the personal computer.

## Revendications

1. Carte à puce (10), notamment carte SIM, munie d'une mémoire (20) intégrée ainsi que d'un bus de commande et de données (32) présentant une zone de contact (24) pour l'échange de données numériques via un lecteur de cartes à puce (22) avec un terminal de radiotéléphonie mobile (14), la carte à puce (10) comprenant un processeur (30) destiné à commander d'autres appareils (34) et/ou dispositions d'appareils (34, 36) via le terminal de radiotéléphonie mobile (14), et des données d'authentification étant transmises au réseau de radiotéléphonie mobile (16) pour enregistrement, **caractérisée en ce que** la carte à puce (10) et le processeur (30) sont réalisés de manière à commander un ordinateur personnel (34) via un réseau de radiotéléphonie mobile (16), l'ordinateur personnel (34) étant couplé au réseau de radiotéléphonie mobile (16) via un terminal de radiotéléphonie mobile (36) ou un modem ou un réseau fixe, et une interface USB pour la carte à puce (10) étant prévue pour transmettre des programmes et des données traitées par le processeur (30) de la carte à puce (10) pour commander l'ordinateur personnel.

2. Terminal de radiotéléphonie mobile (14) muni d'un lecteur de cartes à puce (22) permettant la lecture et l'écriture de la mémoire (20) d'une carte à puce (10), notamment d'une carte SIM, et la carte à puce (10) présente un processeur (30) destiné à commander d'autres appareils (34) et/ou des dispositions d'appareil (34, 36) via le terminal de radiotéléphonie mobile (14) et des données d'authentification sont transmises au réseau de téléphonie mobile (16) pour enregistrement, **caractérisé en ce que** la carte à puce (10) et le processeur (30) sont réalisés de manière à commander un ordinateur personnel (34) via un réseau de radiotéléphonie mobile (16), l'ordinateur personnel (34) étant couplé au réseau de radiotéléphonie mobile (16) via un terminal de radiotéléphonie mobile (36) ou un modem ou un réseau fixe, et une interface USB pour la carte à puce (10) étant prévue pour transmettre des programmes et des données traitées par le processeur (30) de la carte à puce (10) pour commander l'ordinateur personnel.

3. Terminal de radiotéléphonie mobile (14) muni d'un lecteur de cartes à puce (22) permettant la lecture et l'écriture de la mémoire (20) d'une carte à puce (10), selon la revendication 2, **caractérisé par** une interface, notamment une interface câblée et/ou infrarouge et/ou radio permettant de communiquer directement avec la carte à puce (10) via le lecteur de cartes à puce (22).

4. Terminal de radiotéléphonie mobile (14) muni d'un lecteur de cartes à puce (22) permettant la lecture et l'écriture de la mémoire (20) d'une carte à puce (10), selon l'une quelconque des revendications 2 ou 3, **caractérisé en ce qu'**un processeur parallèle est prévu dans le terminal de radiotéléphonie mobile (14) et/ou dans l'ordinateur personnel (34) en vue de la division des tâches de travail.

5. Terminal de radiotéléphonie mobile (14) muni d'un lecteur de cartes à puce (22) permettant la lecture et l'écriture de la mémoire (20) d'une carte à puce (10), selon l'une quelconque des revendications 2 à 4, **caractérisé en ce qu'**une interface, notamment une interface câblée et/ou infrarouge et/ou radio entre le terminal de radiotéléphonie mobile (14) et l'ordinateur personnel (34) est prévue pour l'échange des données.

6. Disposition d'au moins deux terminaux (14, 34) destinée à la commande de l'un des terminaux (34) par l'autre terminal (14),
(a) le premier terminal (14) comportant une unité d'émission/réception (28) et le second terminal une unité d'émission/réception (36, 40),
(b) le premier terminal (14) comportant un lecteur de cartes à puce (22) permettant la lecture et l'écriture d'une carte à puce (10), notamment une carte SIM,
(c) un réseau (16) ou une connexion quelconque permettant au premier terminal (14) d'échanger des données avec le second terminal (34) au moyen de l'unité d'émission/réception (36, 40),
(d) la carte à puce (10) présentant un processeur (30) et un script de consigne dans une mémoire (20) pour la commande du second terminal (34) via le premier terminal (14), et
(e) des données d'authentification étant transmises du premier terminal (14) au réseau de radiotéléphonie mobile (16) pour enregistrement,
**caractérisée en ce que**
(f) le réseau (16) est réalisé sous forme de réseau de radiotéléphonie mobile (16) et le premier terminal (14) sous forme de terminal de radiotéléphonie mobile,
(g) le second terminal est un ordinateur personnel (34), l'ordinateur personnel (34) étant couplé au réseau de radiotéléphonie mobile (16) via un terminal de radiotéléphonie mobile (36) ou un modem ou un réseau fixe,
(h) la carte à puce (10) et le processeur (30) sont réalisés de manière à commander l'ordinateur personnel (34) via un réseau de radiotéléphonie mobile (16), et
(j) une interface USB pour la carte à puce (10) est prévue pour transmettre des programmes et des données traitées par le processeur (30) de la carte à puce (10) pour commander l'ordinateur personnel.
